# EUROPEAN PATENT SPECIFICATION

(11) **EP 4 534 369 B1**
(45) Date of publication and mention of the grant of the patent: **11.03.2026**
(21) Application number: 23201685.7
(22) Date of filing: 04.10.2023
(51) Int. Cl.: B60W 10/04, B60W 10/18, B60W 30/02, B60W 50/00, B60W 50/14

(54) **DETERMINING STABILITY OF A VEHICLE BASED ON A MOTION OF TRAILERS ATTACHED TO THE VEHICLE**
BESTIMMUNG DER STABILITÄT EINES FAHRZEUGS AUF BASIS EINER BEWEGUNG VON AN DEM FAHRZEUG BEFESTIGTEN ANHÄNGERN
DÉTERMINATION DE LA STABILITÉ D'UN VÉHICULE SUR LA BASE D'UN MOUVEMENT DE REMORQUES FIXÉES AU VÉHICULE

(43) Date of publication of application: 09.04.2025
(73) Proprietor: VOLVO TRUCK CORPORATION, 405 08 Göteborg (SE)
(72) Inventor: Subramanian, Chidambaram, Durham 27705 (US)
(74) Representative: Valea AB

(56) References cited:
- WO-A1-2013/066215
- WO-A1-2022/122112
- US-A1- 2022 017 161

## Description

### TECHNICAL FIELD

The disclosure relates generally to motion management of a vehicle. In particular aspects, the disclosure relates to determining stability of a vehicle based on a motion of a plurality of trailers attached to the vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Combination vehicles may be at risk when the vehicle travels with multiple trailers. This is since the motion of the trailers may easily cause a combination vehicle to be unstable, e.g., may risk to roll over, may risk jack-knifing, and/or may be difficult to steer. This is both a problem for manual operators as well as for autonomously driven vehicles.

Fleet business and commercial vehicle transportation solutions have exponentially increased over the past few years to adopt to Advanced Driver Assistance systems (ADAS) to help drivers navigate combination vehicles. Therefore, performance criteria for safety and stability are given more attention. US2022017161A1 discusses methods for detecting jack-knifing risks by having sensors detect an angle of misalignment between a towed vehicle and the vehicle in front of the towed vehicle in a road train. While some instability can be managed, the stability risks may still occur.

Hence, there is an ongoing strive to improve handling of stability in combination vehicles.

### SUMMARY

According to a first aspect of the disclosure, a computer system comprising processing circuitry configured to determine whether or not a combination vehicle is unstable. The combination vehicle comprises a tractor and a plurality of trailers pulled by the tractor. The plurality of trailers comprises a first trailer attached to the tractor. The processing circuitry is configured to obtain one or more vehicle condition signals indicative of a status of the combination vehicle. The one or more vehicle condition signals being indicative of any one or more out of: an acceleration, a deceleration, a steering angle, at least one pedal position, a throttle status, at least one axle load, a suspension status, and a position of the combination vehicle. The one or more vehicle condition signals may in particular indicate the status of the tractor. The processing circuitry is configured to obtain one or more relative positions of the first trailer. The one or more relative position are respectively indicative of a position and orientation of the first trailer, relative to the tractor. The processing circuitry is configured to, based on the one or more relative positions of the first trailer, and based on the status of the combination vehicle, estimate a motion of the plurality of trailers. The processing circuitry is further configured to, based on the estimated motion of the plurality of trailers, determine whether or not the combination vehicle is unstable.

The first aspect of the invention may seek to overcome vehicle instability when travelling with a plurality of trailers.

A technical benefit may include improved handling of stability when travelling with a plurality of trailers. This is since when it is determined that the vehicle is unstable, a vehicle system and/or a driver of the vehicle may be made aware that the vehicle is unstable. Thereby, the vehicle system and/or the driver may take any necessary precaution to avoid or mitigate danger, e.g., to brake the vehicle accordingly, reduce torque, steer the vehicle, etc.

Furthermore, since the motion of the trailers is estimated based on the one or more relative positions of the first trailer, and based on the status of the combination vehicle, a more efficient estimation of the motion of the plurality of trailers is achieved. This is since there is no need to have external sensors placed on each trailer out the plurality of trailers, and no need to communicate said sensor data which may be a problem for some trailer systems with limited communication capabilities. Instead, only the status of the combination vehicle, e.g., tractor motion, and the one or more relative positions of the first trailer is needed to estimate the motion and subsequently, to determine whether or not the combination vehicle is unstable.

Optionally in some examples, including in at least one preferred example, the processing circuitry is further configured to, in response to determining that the combination vehicle is unstable, trigger a preventive action.

A technical benefit may include improved handling of stability when travelling with a plurality of trailers. This is since the triggering of the preventive action will effectively avoid or mitigate any dangers relating to the unstable combination vehicle, e.g., by triggering any one or more out of: an alert, a torque reduction, an evasive maneuver, and a braking strategy.

Optionally in some examples, including in at least one preferred example, the first trailer is attached to a kingpin of the tractor. In some of these examples, the processing circuitry is further configured to obtain the one or more relative positions of the first trailer by:
- obtaining sensor data indicative of a status of the kingpin of the tractor, and
- predict the one or more relative positions of the first trailer based on the status of the combination vehicle, and the obtained sensor data.

A technical benefit may include improved handling of stability when travelling with a plurality of trailers. This is since the one or more relative positions of the first trailer can accurately be predicted based on the combination vehicle status and the kingpin status, further improving the motion estimation of the plurality of trailers.

Optionally in some examples, including in at least one preferred example, the computer system is further configured to predict the one or more relative positions of the first trailer based on a first statistical model. The first statistical model is trained on one or more vehicle training signals indicative of any one or more out of: an acceleration, a deceleration, a steering angle, at least one pedal position, a throttle status, at least one axle load, a suspension status, and a position of a first training combination vehicle, and trained on sensor data indicative of a relative position of a training trailer attached to a tractor of the first training combination vehicle.

A technical benefit may include improved handling of stability when travelling with a plurality of trailers. This is since the one or more relative positions of the first trailer may be more accurately estimated as the first statistical model is trained with a number of status parameters with respect to a measured relative position of a training trailer. This means that the first statistical model may comprise a mapping of status and relative positions and may using statistics and/or machine learning effectively build a function which maps combination vehicle status to relative positions of first trailers. In other words, the first statistical is trained to accurately estimate how a first trailer moves relative to a tractor based on a status of a combination vehicle.

Optionally in some examples, including in at least one preferred example, the processing circuitry is further configured to obtain the one or more relative positions of the first trailer by at least partly measuring the one or more relative positions of the first trailer using at least two position sensors mounted at different locations of the tractor.

A technical benefit may include improved handling of stability when travelling with a plurality of trailers. This is since the one or more relative positions are more accurate as they are measured by the at least two position sensors.

Optionally in some examples, including in at least one preferred example, the processing circuitry is configured to estimate the motion of the plurality of trailers by being configured to estimate a motion of the first trailer. In these examples, the motion of the first trailer is estimated based on the one or more relative positions of the first trailer, and based on the status of the combination vehicle. In these examples, the processing circuitry is further configured to predict the motion of the plurality of trailers based on the motion of the first trailer.

A technical benefit may include improved handling of stability when travelling with a plurality of trailers. This is since predicting the motion of the plurality of trailers can be based on an estimation of the motion of the first trailer. In other words, based on an estimation of how the first trailer is moving, the processing circuitry is enabled to further estimate the motion of the plurality of trailers, e.g., which will move as a reaction to the first trailer motion and the combination vehicle status.

Optionally in some examples, including in at least one preferred example, the processing circuitry is configured to predict the motion of the plurality of trailers at least partly based on a quantity of trailers in the plurality of trailers.

A technical benefit may include improved handling of stability when travelling with a plurality of trailers. This is since the quantity of trailers in the plurality of trailers may be used for improving the motion prediction of the plurality of trailers. For example, the quantity of the trailers may not only at least partly determine a length of the combination vehicle, but will also determine how any one or more out of the plurality of trailers react to the motion of the first trailer. The quantity may also be used as a parameter to any statistical model, e.g., machine learning model, for predicting the motion of the plurality of trailers.

Optionally in some examples, including in at least one preferred example, the processing circuitry is configured to predict the motion of the plurality of trailers at least partly based on a second statistical model trained on training data comprising a relative motion of one or more second training trailers of one or more second training combination vehicles, a number of trailers in the one or more second training combination vehicles, and motion sensor data of respective one or more training trailers in the one or more second training combination vehicles.

In other words, the second statistical model may allow to accurately estimate how the plurality of trailers are moving based on being trained on sensor data of how the plurality of trailers are moving and behaving based on the number of trailers, e.g., with respect to a motion of the trailer closest connected with the tractor, i.e., the first trailer or a corresponding front-most trailer of the one or more training trailers.

Accordingly, a technical benefit may include improved handling of stability when travelling with a plurality of trailers. This is since accuracy of predicting the motion of the plurality of trailers is improved due to the second statistical model.

Optionally in some examples, including in at least one preferred example, the processing circuitry is configured to determine whether or not the combination vehicle is unstable by determining whether or not the estimated motion of the plurality of trailers is associated with a motion predefined as unstable.

A technical benefit may include improved handling of stability when travelling with a plurality of trailers. This is since when predefined patterns of motion are detected they may immediately indicate that the combination vehicle is unstable, thereby allowing the vehicle and/or the driver to quickly take necessary precautions.

Optionally in some examples, including in at least one preferred example, the processing circuitry is configured to determine whether or not the combination vehicle is unstable based on a third statistical model. In these examples, the third statistical model is trained on one or more third training trailer motions of one or more third training combination vehicles. In these examples, and trained by labelling one or more motions of the training trailer motions as unstable.

A technical benefit may include improved handling of stability when travelling with a plurality of trailers. This is since the third statistical model is trained with labeling one or more motions as unstable, the third statistical model can effectively be trained to generate a function mapping any motion of the combination vehicle to stable or unstable. The third statistical model may for example extrapolate and/or be trained such that further motions than the trained motions are mapped to unstable.

According to a second aspect of the disclosure a combination vehicle comprising a tractor and a plurality of trailers pulled by the tractor is provided. The plurality of trailers comprises a first trailer attached to the tractor. The combination vehicle comprises the computer system according to the first aspect.

The second aspect of the disclosure may seek to overcome vehicle instability when travelling with a plurality of trailers.

A technical benefit may include improved handling of stability when travelling with a plurality of trailers.

Optionally in some examples, including in at least one preferred example, the combination vehicle is an autonomous vehicle. Alternatively, as an option in some examples, including in at least one preferred example, the combination vehicle is a manually driven vehicle.

The second aspect may further be combined with any one or more examples of the first aspect.

Any technical benefits of the first aspect further applies to the second aspect.

According to a third aspect of the disclosure a computer-implemented method for determining whether or not a combination vehicle is unstable is provided. The combination vehicle comprises a tractor and a plurality of trailers pulled by the tractor. The plurality of trailers comprises a first trailer attached to the tractor, the method comprising:
- by processing circuitry of a computer system, obtaining one or more vehicle condition signals indicative of a status of the combination vehicle, the one or more vehicle condition signals being indicative of any one or more out of: an acceleration, a deceleration, a steering angle, at least one pedal position, a throttle status, at least one axle load, a suspension status, and a position of the combination vehicle,
- by the processing circuitry, obtaining one or more relative positions of the first trailer, the one or more relative position respectively being indicative of a position and orientation of the first trailer, relative to the tractor,
- by the processing circuitry, based on the one or more relative positions of the first trailer, and based on the status of the combination vehicle, estimating a motion of the plurality of trailers,
- by the processing circuitry, based on the estimated motion of the plurality of trailers, determining whether or not the combination vehicle is unstable.

The third aspect of the disclosure may seek to overcome vehicle instability when travelling with a plurality of trailers.

A technical benefit may include improved handling of stability when travelling with a plurality of trailers. This is since when it is determined that the vehicle is unstable, a vehicle system and/or a driver of the vehicle may be made aware that the vehicle is unstable. Thereby, the vehicle system and/or the driver may take any necessary precaution to avoid or mitigate danger, e.g., to brake the vehicle accordingly, reduce torque, steer the vehicle, etc.

Furthermore, since the motion of the trailers are estimated based on the one or more relative positions of the first trailer, and based on the status of the combination vehicle, a more efficient estimation of the motion of the plurality of trailers is achieved. This is since there is no need to have external sensors placed on each trailer out the plurality of trailers, and no need to communicate said sensor data which may be a problem for some trailer systems with limited communication capabilities. Instead, only the status of the combination vehicle, e.g., tractor motion, and the one or more relative positions of the first trailer is needed to estimate the motion and subsequently, to determine whether or not the combination vehicle is unstable.

Examples of the third aspect may be combined with the examples of the first and/or second aspects in any suitable manner.

Technical benefits of the third aspect may correspond to the technical benefits of the first aspect.

Optionally in some examples, including in at least one preferred example, by processing circuitry of a computer system, in response to determining that the combination vehicle is unstable, triggering a preventive action.

Optionally in some examples, including in at least one preferred example, obtaining the one or more relative positions of the first trailer comprises:
- obtaining sensor data indicative of a status of a kingpin of the tractor, wherein the first trailer is attached to said kingpin, and
- predicting the one or more relative positions of the first trailer based on the status of the combination vehicle, and the obtained sensor data.

Optionally in some examples, including in at least one preferred example, predicting the one or more relative positions of the first trailer is based on a first statistical model. In these examples, the first statistical model is trained on one or more vehicle training signals indicative any one or more out of: an acceleration, a deceleration, a steering angle, at least one pedal position, a throttle status, at least one axle load, a suspension status, and a position of a first training combination vehicle, and trained on sensor data indicative of a relative position of a first training trailer attached to a tractor of the first training combination vehicle.

Optionally in some examples, including in at least one preferred example, obtaining the one or more relative positions of the first trailer comprises at least partly measuring the one or more relative positions of the first trailer using at least two position sensors mounted at different locations of the tractor.

Optionally in some examples, including in at least one preferred example, estimating the motion of the plurality of trailers comprises:
- estimating a motion of the first trailer, wherein the motion of the first trailer is estimated based on the one or more relative positions of the first trailer, and based on the status of the combination vehicle and
- predicting the motion of the plurality of trailers based on the motion of the first trailer.

Optionally in some examples, including in at least one preferred example, predicting the motion of the plurality of trailers is at least partly based on a quantity of trailers in the plurality of trailers.

Optionally in some examples, including in at least one preferred example, predicting the motion of the plurality of trailers is at least partly based on a second statistical model trained on training data comprising a relative motion of one or more second training trailers of one or more second training combination vehicles, a number of trailers in the one or more second training combination vehicles, and motion sensor data of respective one or more second training trailers in the one or more second training combination vehicles.

Optionally in some examples, including in at least one preferred example, determining whether or not the combination vehicle is unstable comprises determining whether or not the estimated motion of the plurality of trailers is associated with a motion predefined as unstable.

Optionally in some examples, including in at least one preferred example, determining whether or not the combination vehicle is unstable based on a third statistical model. In these examples, the third statistical model is trained on one or more third training trailer motions of one or more third training combination vehicles, and trained by labelling one or more motions of the training trailer motions as unstable.

According to a fourth aspect of the disclosure, a computer program product is provided. The computer program product comprises program code for performing, when executed by the processing circuitry, the method according to the third aspect.

According to a fifth aspect of the disclosure, a non-transitory computer-readable storage medium is provided. The non-transitory computer-readable storage medium comprises instructions, which when executed by the processing circuitry, cause the processing circuitry to perform the method according to the third aspect.

A technical benefit of the fourth and/or fifth aspects may correspond to the benefits of the first and/or third aspects. The fourth and/or fifth aspects may be combined with any one or more features or examples of the first and/or third aspects.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** illustrates a vehicle according to an example.
**FIG. 2** illustrates a vehicle according to an example.
**FIG. 3** illustrates a flowchart of a method according to an example.
**FIG. 4** illustrates a vehicle according to an example.
**FIG. 5** illustrates a vehicle according to an example.
**FIG. 6** illustrates a vehicle according to an example.
**FIG. 7** illustrates a combined block diagram and flow chart illustrating an example scenario according to an example.
**FIG. 8** is another view of **FIG. 8****,** according to an example.
**FIG. 9** is a flow chart of a method according to an example.
**FIG. 10** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

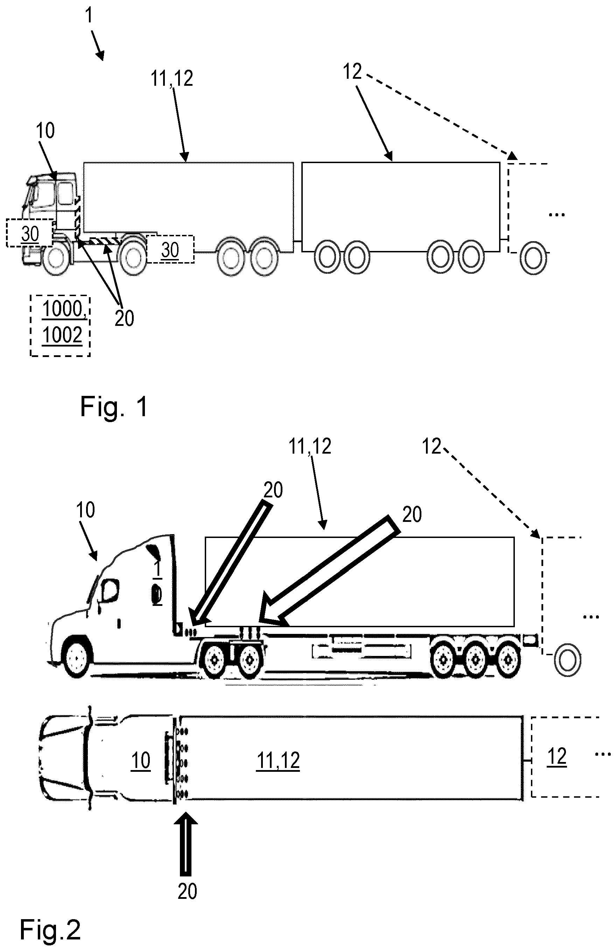

**FIG. 1** is an exemplary **combination vehicle 1** according to an example.

The combination vehicle 1 comprises a **tractor 10.**

The combination vehicle 1 comprises a **plurality of trailers 12** pulled by the tractor 10. In other words, when the combination vehicle 1 is travelling, the tractor 10 is configured to pull the plurality of trailers 12.

The plurality of trailers 12 may comprise any suitable number of trailers, e.g., two trailers, three trailers, four trailers, or more.

The plurality of trailers 12 may, or may not, comprise respective sensors for measuring the motion of the respective trailers. In examples where the plurality of trailers 12 have these motion sensors, e.g., Inertial Measurement Units (IMU), these respective motion sensors may be used to measure the respective motion of the respective trailer, e.g., as part of estimating said motion, and alternative approaches of estimating said respective motions of examples herein may be used when the sensor data could not be retrieved, e.g., due to communication and/or sensor failure and/or where sensors are not present in the plurality of trailers 12.

The tractor 10 may be any type of leading vehicle unit pulling the plurality of trailers 12.

The plurality of trailers 12 comprises a **first trailer 11** attached to the tractor 10. The first trailer 11 may be the front-most trailer in the plurality of trailers 12, in a travelling direction of the combination vehicle 1.

The tractor 10 may comprise a kingpin for attaching the first trailer 11.

The combination vehicle 1 may comprise a **set of sensors 30,** typically comprised in the tractor 10.

The set of sensors 30 may comprise a kingpin sensor, measuring a status of the kingpin. The status of the kingpin may comprise an angle between the first trailer 11 and the tractor 10 with respect to the kingpin.

The set of sensors 30 may comprise one or more sensors used for measuring, estimating and/or deriving one or more vehicle condition signals indicative of a status of the combination vehicle 1. The one or more vehicle condition signals may be indicative of any one or more out of: an acceleration, a deceleration, a steering angle, at least one pedal position, a throttle status, at least one axle load, a suspension status, and a position of the combination vehicle 1. The one or more vehicle condition signals may in particular be indicative of measurements and/or estimates of the tractor 10.

The set of sensors 30 may comprise **at least two position sensors 20** mounted at different locations of the tractor 10. The at least two position sensors 20 may be any suitable distance sensors measuring a distance from the respective sensor and the first trailer 11. In this way, it may be possible to obtain one or more positions of the first trailer 11, relative the tractor 10, by measuring the one or more relative positions of the first trailer 11 using the at least two position sensors 20.

The at least two position sensors 20 may respectively comprise any one or more out of: laser sensors, infrared sensors, ultrasound sensors, cameras, etc.

The at least two position sensors 20 may respectively be arranged as at least two strips of sensors, the strips being elongated and directed towards the first trailer 11.

Typically, a first sensor out of the least two position sensors 20 may be arranged to measure the first trailer 11 from a side of the first trailer 11, i.e., from a horizontal perspective, e.g., mounted to a cabin of the tractor 10.

Typically, a second sensor out of the least two position sensors 20 may be arranged to measure the first trailer 11 from below, i.e., from a vertical perspective, e.g., mounted to a chassis of the tractor 10 and/or directed upwards towards the first trailer 11.

Since the at least two position sensors 20 are mounted at different locations of the tractor 10, measurements from the at least two position sensors 20 will ensure that it is possible to model positions and/or motions of the first trailer 11, e.g., relative to the tractor 10, in a three-dimensional space. In other words, it may be possible to measure over time, or at least derive or estimate using the measurements, how the first trailer 11 is moving in three dimensions, e.g., with respect to any one or more out of yaw, pitch, and/or roll.

Methods herein may be performed by a **computer system 1000** and/or a **processing circuitry 1002.**

The computer system 1000 and/or the processing circuitry 1002 may be comprised in the combination vehicle 1, or comprised in a remote location such as in a server or in a cloud service.

The computer system 1000 and/or a processing circuitry 1002 may be communicatively connected to any suitable entity of the combination vehicle 1. In other words, the computer system 1000 and/or a processing circuitry 1002 may be able to control and/or communicate with any suitable entity of the combination vehicle 1, e.g., the set of sensors 30.

The computer system 1000 and/or a processing circuitry 1002 may be, or be part of, or comprise an Electronic Control Unit (ECU) of the combination vehicle 1.

**FIG. 2** illustrates the combination vehicle 1 according to an example, wherein the at least two position sensors 20 are illustrated in how they are mounted to the tractor 10 from two different perspectives.

In this example, a first sensor out of the least two position sensors 20 is configured to measure the position of the first trailer 11 from a side of the first trailer 11, i.e., from a horizontal perspective, e.g., mounted to a cabin of the tractor 10. The position of the first trailer 11 may be measured relative to the tractor 10.

In this example, a second sensor out of the least two position sensors 20 is configured to measure the position of the first trailer 11 from below, i.e., from a vertical perspective, e.g., mounted to a chassis and/or a cab of the tractor 10 and/or directed upwards towards the first trailer 11. The position of the first trailer 11 may be measured relative to the tractor 10.

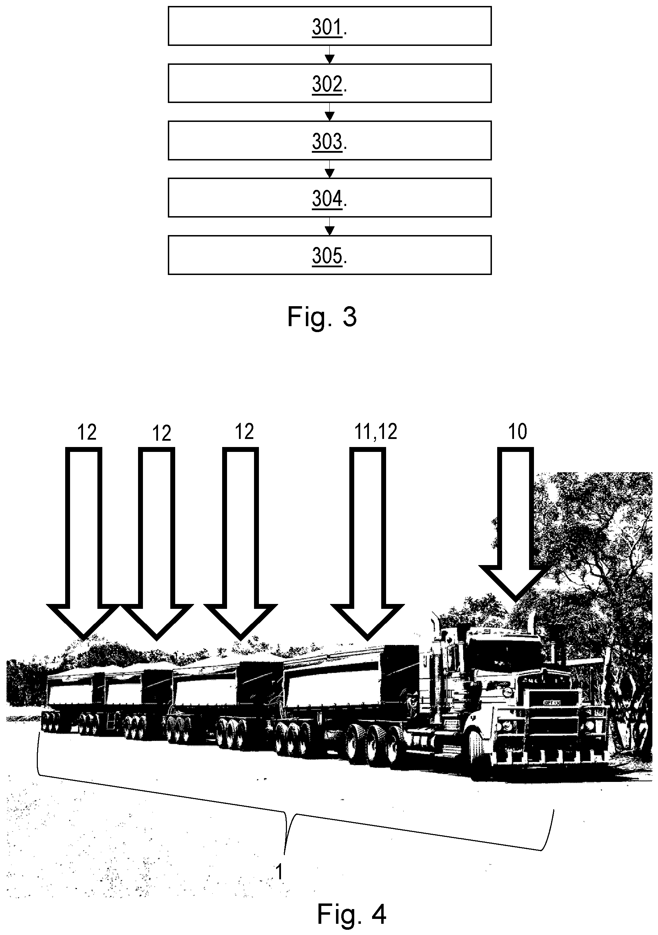

**FIG. 3** illustrates a flowchart of a computer-implemented method for determining whether or not the combination vehicle 1 is unstable according to an example. The combination vehicle 1 comprises the tractor 10 and the plurality of trailers 12 pulled by the tractor 10. The plurality of trailers 12 comprises the first trailer 11 attached to the tractor 10.

The method comprises the following actions, which actions may be performed in any suitable order, and which actions may be combined with any one of the examples herein.

The computer system 1000 and/or the processing circuitry may be configured to perform the method according to any one or more out the actions 301-305, in any suitable order.

### Action 301

The method comprises obtaining one or more vehicle condition signals indicative of a status of the combination vehicle 1. The one or more vehicle condition signals are indicative of any one or more out of: an acceleration, a deceleration, a steering angle, at least one pedal position, a throttle status, at least one axle load, a suspension status, and a position of the combination vehicle 1.

The one or more vehicle condition signals may be measured from the set of sensors 30, e.g., by obtaining sensor data, and/or derived or estimated based on said sensor data.

The one or more vehicle condition signals may be indicative of the tractor 10 status, i.e., indicative of any one or more out of: an acceleration of the tractor 10, a deceleration of the tractor 10, a steering angle of the tractor 10, at least one pedal position of the tractor 10, a throttle status of the tractor 10, at least one axle load of the tractor 10, a suspension status of the tractor 10, and of the tractor 10.

### Action 302

The method comprises obtaining one or more relative positions of the first trailer 11. The one or more relative position are respectively indicative of a position and orientation of the first trailer 11, relative to the tractor 10.

In some examples, the one or more relative positions of the first trailer 11 may be a position in three-dimensions relative to the tractor 10.

In some examples, the one or more relative positions may be obtained over a time period such that it is possible to estimate the first trailers motion based on the one or more relative positions.

In some examples, the first trailer 11 is attached to a kingpin of the tractor 10. In some of these examples, obtaining the one or more relative positions of the first trailer 11 comprises obtaining sensor data indicative of a status of the kingpin of the tractor 10, e.g., an angle rotated around the kingpin, i.e., an angle and/or angular rate between the first trailer 11 and the tractor 10. In some of these examples, obtaining the one or more relative positions comprises predicting the one or more relative positions of the first trailer 11 based on the status of the combination vehicle 1, and the obtained sensor data, i.e., based on the status of the kingpin. In other words, the one or more relative positions may be predicted based on the status of the kingpin and the status of the combination vehicle 1, e.g., a motion of the tractor 10.

In some examples, predicting the one or more relative positions of the first trailer 11 is based on a first statistical model, e.g., a machine learning model such as by using a trained neural network.

The first statistical model is trained on one or more vehicle training signals indicative any one or more out of: an acceleration, a deceleration, a steering angle, at least one pedal position, a throttle status, at least one axle load, a suspension status, and a position of a first training combination vehicle, e.g., a tractor of the first training combination vehicle, and trained on sensor data indicative of a relative position of a first training trailer attached to a tractor of the first training combination vehicle.

The first training combination vehicle may be any suitable combination vehicle, e.g., one or more real and/or simulated combination vehicles used for training the first statistical model in advance.

In some examples, the first training combination vehicle is the combination vehicle 10. The first statistical model may for example be trained whenever there are sensor data or measurements available for the relative position of a first trailer 11, and the one or more relative positions of the first trailer 11 may subsequently be predicted when sensor data or measurements are unavailable, e.g., due to communication or sensor failure.

In some examples, obtaining the one or more relative positions of the first trailer 11 comprises at least partly measuring the one or more relative positions of the first trailer 11 using at least two position sensors 20 mounted at different locations of the tractor 10. In this way, at least part of the obtained one or more relative positions of the first trailer 11, e.g., which may further be used for training the first statistical model, thereby improving the accuracy of the first statistical model for each measurement.

### Action 303

The method comprises, based on the one or more relative positions of the first trailer 11, and based on the status of the combination vehicle 1, estimating a motion of the plurality of trailers 12.

In other words, based on the positions of the first trailer, e.g., over a time period, and based on the status of the combination vehicle 1, e.g., a motion of the tractor 10, the motion of the plurality of trailers 12 may be estimated, e.g., as a reaction to the status of the combination vehicle 1, e.g., a motion of the tractor 10, and the one or more relative positions of the first trailer. For example, if the motion of the tractor 10 is known, and the position of the first trailer 11 is known, the reaction of the rest of the plurality of trailers may be estimated based on physics models and/or heuristics.

In some examples, estimating the motion of the plurality of trailers 12 comprises estimating a motion of the first trailer 11. In these examples, the motion of the first trailer 11 is estimated based on the one or more relative positions of the first trailer 11, and based on the status of the combination vehicle 1, e.g., the motion of the tractor 10. In these examples, predicting the motion of the plurality of trailers 12 is based on the motion of the first trailer 11. In other words, estimating the motion of the plurality of trailers 12 is based on a reaction of the motion of the first trailer 11.

In some examples, predicting the motion of the plurality of trailers 12 is at least partly based on a quantity of trailers in the plurality of trailers 12. The quantity of trailers may be an important parameter for any suitable statistics model or machine learning model, e.g., the first statistical model. In some examples, the exact number of trailers in the plurality of trailers may however not be known, and in these situations, a predefined number may be used.

In some examples, predicting the motion of the plurality of trailers 12 is at least partly based on a second statistical model. The second statistical model may be a machine learning model, e.g., comprising a trained neural network. The second statistical model may be trained on training data comprising a relative motion of one or more second training trailers of one or more second training combination vehicles, a number of trailers in the one or more second training combination vehicles, and motion sensor data of respective one or more second training trailers in the one or more second training combination vehicles.

When the second statistical model is trained with different number of trailers in the one or more second training combination vehicles, the second statistical model may be able to accurately extrapolate such that it may accurately be used to predicting the motion of the plurality of trailers 12 given any number of trailers in the plurality of trailers 12.

The second training combination vehicle may be any suitable combination vehicle, e.g., one or more real and/or simulated combination vehicles used for training the second statistical model in advance. In some examples, the second training combination vehicle is the combination vehicle 10.

In some examples, estimating a motion of the plurality of trailers 12 may comprise estimating the motion of the plurality of trailers 12 as a motion of a single entity, i.e., a single motion describing all of the plurality of trailers 12. Additionally or alternatively In some examples, estimating a motion of the plurality of trailers 12 may comprise estimating the motion of the plurality of trailers 12 as respective motions of one or more out of the plurality of trailers 12.

### Action 304

The method comprises, based on the estimated motion of the plurality of trailers 12, determining whether or not the combination vehicle 1 is unstable, e.g., if there is a risk for jack-knifing, trailer swings, risk of rolling over, losing traction of a trailer, etc.

In some examples, the method comprises, based on the estimated motion of the plurality of trailers 12, determining that the combination vehicle 1 is unstable.

When determining that the combination vehicle 1 is unstable, the method may further determine how the combination vehicle 1 is unstable.

When determining that the combination vehicle 1 is unstable, the method may further determine which one or more trailers of the plurality of trailers 12 is unstable.

In some examples determining whether or not the combination vehicle 1 is unstable comprises determining whether or not the estimated motion of the plurality of trailers 12 is associated with a motion predefined as unstable, e.g., any one or more out of:
∘ A trailer out of the plurality of trailers 12 has a lateral acceleration or speed higher than a threshold,
∘ A trailer out of the plurality of trailers 12 has a yaw rate above a threshold,
∘ A trailer out of the plurality of trailers 12 has a pitch rate above a threshold,
∘ A trailer out of the plurality of trailers 12 has a roll rate above a threshold,
∘ Two different trailers out of the plurality of trailers 12 differ in yaw rate by more than a threshold, and
∘ Two different trailers out of the plurality of trailers 12 differ in pitch rate by more than a threshold, and
∘ Two different trailers out of the plurality of trailers 12 differ in roll rate by more than a threshold, and
∘ Two different trailers out of the plurality of trailers 12 differ in longitudinal speed or acceleration by more than a threshold, and
∘ Two different trailers out of the plurality of trailers 12 differ in lateral speed or acceleration by more than a threshold.

In some examples determining whether or not the combination vehicle 1 is unstable based on a third statistical model. The third statistical model may be a machine learning model, e.g., comprising a trained neural network.

The third statistical model may be trained on one or more third training trailer motions of one or more third training combination vehicles, and trained by labelling one or more motions of the training trailer motions as unstable.

Since the one or more motions have been labelled, the third statistical model is enabled to accurately predict, unstable motions.

The third training combination vehicle may be any suitable combination vehicle, e.g., one or more real and/or simulated combination vehicles used for training the third statistical model in advance. In some examples, the third training combination vehicle is the combination vehicle 10.

In some examples, the third statistical model may be continuously trained based on the motion of the combination vehicle 1, e.g., by triggering induced instability in testing such as by forcing double lane changes and/or fast lateral movement.

### Action 305

In some examples, the method comprises, in response to determining that the combination vehicle 1 is unstable, e.g., as in action 304, triggering a preventive action.

The preventive action may be any suitable action for mitigating or hindering or avoiding a dangerous situation due to the instability of the plurality of trailers 12.

For example, the preventive action may comprise any one or more out of:
- triggering an alert, e.g., a visual and/or sound alert to a driver and/or surrounding traffic
- triggering an evasive steering maneuver, e.g., based on how the combination vehicle 1 is unstable such as depending on which trailer out of the plurality of trailers 12 causes the instability,
- braking the combination vehicle 1, e.g., wherein the braking strategy may be determined based on the motion of the plurality of trailers 12 and/or the status of the combination vehicle 1, and
- reducing or removing a torque applied to wheels of the combination vehicle 1.

**FIG. 4** illustrates a real-world scenario of the combination vehicle 1 comprising four heavily loaded trailers in the plurality of trailers 12, led by the first trailer 11, and pulled by the tractor 10.

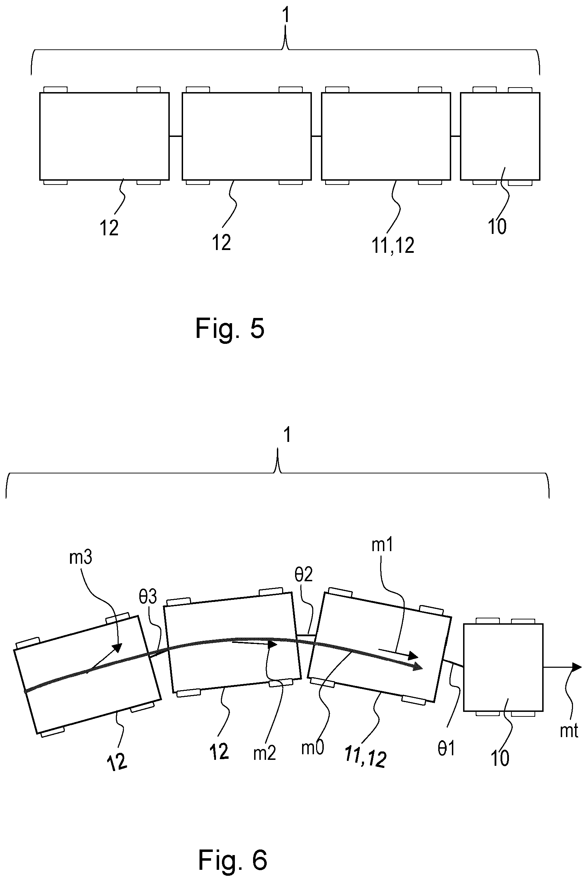

**FIG. 5** illustrates the combination vehicle 1 comprising three trailers in the plurality of trailers 12, led by the first trailer 11, and pulled by the tractor 10.

**FIG. 6** illustrates the combination vehicle 1 comprising three trailers in the plurality of trailers 12, led by the first trailer 11, and pulled by the tractor 10. In this example, one example of estimated motions is illustrated. For example the status of the combination vehicle 1, as obtained in Action 301, by the one or more vehicle condition signals, may indicate a **tractor motion mt,** of the tractor 10.

The motion of the plurality of trailers 12 may further be estimated, e.g., as in action 303, to be a single motion m0, describing a motion of the plurality of trailers 12 as if it was a single entity, and/or the motion of the plurality of trailers 12 may be estimated for each trailer out of the plurality of trailers 12, to be a **first motion m1, a second motion m2,** and a **third motion m3.**

Additionally, in some examples, the motions m0, m1, m2, m3 may be associated with respective angles between the plurality of trailers 12 and/or the tractor 10, e.g., a **first angle θ1,** a **second angle θ2,** and a **third angle θ3.**

Based on any one or more out of the motions m0, m1, m2, m3, the stability of the combination vehicle 1 may be determined, e.g., as in action 304, which may indicate a risk for jack-knifing, losing traction of a trailer, trailer swing, roll over, etc.

Additionally to using the motion of the plurality of trailers 12, determining the stability of the vehicle, e.g., as in action 304, may further be based on the angles between the plurality of trailers 12 and/or the tractor 10, any one or more out of the **first angle θ1,** the **second angle θ2,** and the **third angle θ3.**

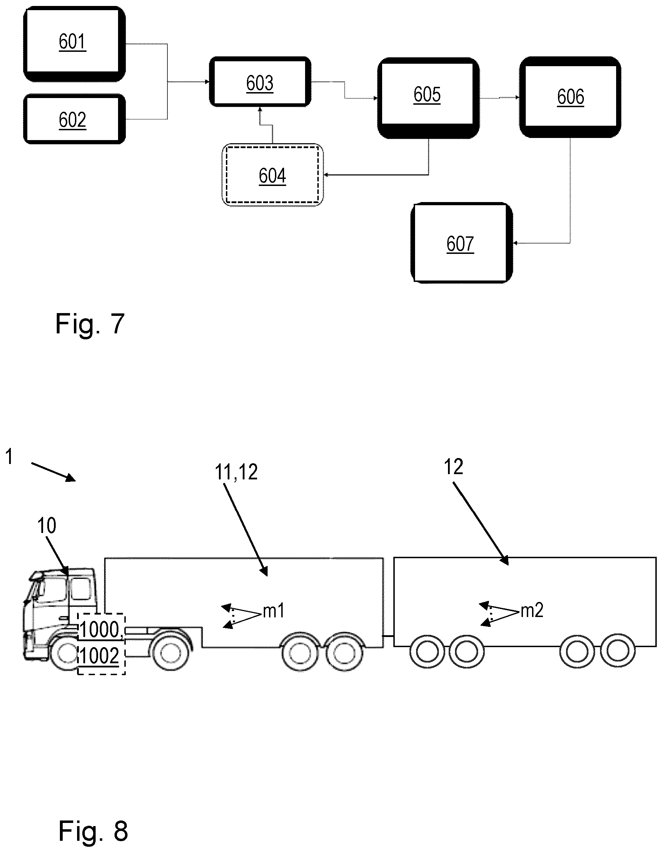

**FIG. 7** illustrates a combined block diagram and flow chart illustrating an example scenario according to an example.

An **Artificial Intelligence (AI), model 603,** e.g., any suitable statistical model or machine learning model such as the first statistical model, may **obtain 601 the** status of the combination vehicle 1, e.g., any one or more out of: vehicle velocity, wheels speeds, steering angle, throttle, brake pedal position, axle load data, position such as global positioning system (GPS) coordinates, suspension articulation data, e.g., as part of the one or more vehicle condition signals, e.g., as in action 301. The AI model 603 may further **obtain 602** kingpin sensor data of the tractor 10, e.g., as in action 301. The AI model 603 may **obtain 605,** a relative position of the first trailer 11, relative to the tractor 10, e.g., as in action 302. The relative position of the first trailer 11 may be predicted using the status of the combination vehicle 1, and the kingpin sensor data, or measured by the at least two sensors 20. When measured, the relative position may be **sent 605** to the AI model 603 as training data for training the AI model 603 based on the measured relative position with respect to the status of the combination vehicle 1, and the kingpin sensor data. In other words, the relative position may be measured when possible and predicted when sensor data is unavailable or otherwise deemed inaccurate or faulty.

The relative trailer position may be **sent 606** as an input to a stability estimation model for determining whether or not the combination vehicle 1 is unstable, e.g., such as the third statistical model, e.g., as in action 304.

When determined that the combination vehicle 1 is unstable, or is possibly unstable as indicated by predictions from the stability estimation model, **stabilizing 607** the combination vehicle e.g., by adjusting a torque applied to the combination vehicle 1, e.g., as in action 305.

**FIG. 8** is another view of **FIG. 1****,** according to an example.

A computer system 1000 comprising processing circuitry 1002 configured to determine whether or not the combination vehicle 1 is unstable is provided.

The combination vehicle 1 comprises the tractor 10 and a plurality of trailers 12 pulled by the tractor 10. The plurality of trailers 12 comprises the first trailer 11 attached to the tractor 10,

The processing circuitry 1002 is configured to obtain one or more vehicle condition signals indicative of a status of the combination vehicle 1. The one or more vehicle condition signals are indicative of any one or more out of: an acceleration, a deceleration, a steering angle, at least one pedal position, a throttle status, at least one axle load, a suspension status, and a position of the combination vehicle 1.

The processing circuitry 1002 is configured to obtain one or more relative positions of the first trailer 11. The one or more relative positions are respectively indicative of a position and orientation of the first trailer 11, relative to the tractor 10.

The processing circuitry 1002 is configured to, based on the one or more relative positions of the first trailer 11, and based on the status of the combination vehicle 1, estimate a motion m1, m2, of the plurality of trailers 12.

The processing circuitry 1002 is configured to, based on the estimated motion m1, m2, of the plurality of trailers 12, determine whether or not the combination vehicle 1 is unstable.

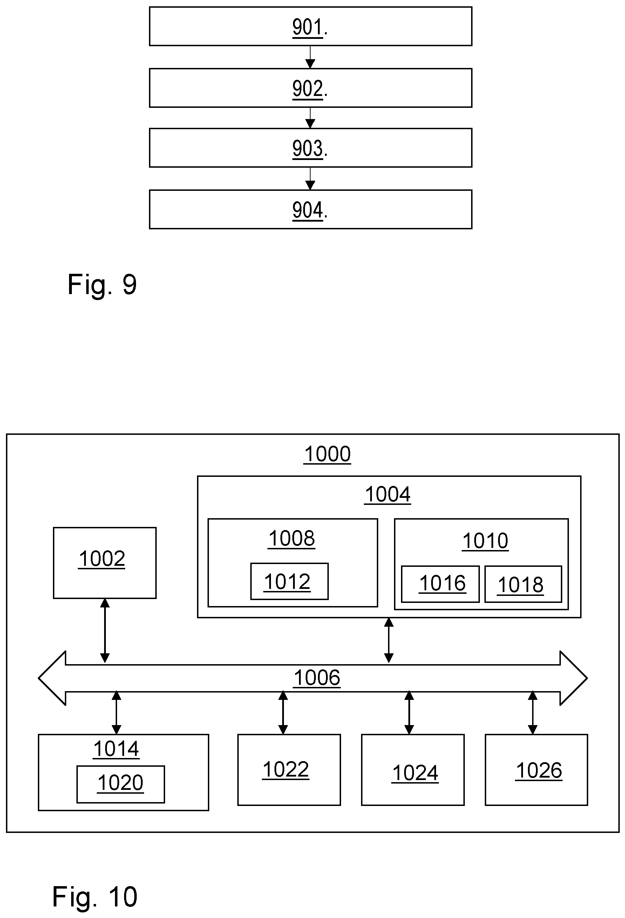

**FIG. 9** illustrates a computer-implemented method for determining whether or not the combination vehicle 1 is unstable according to an example. The combination vehicle 1 comprises the tractor 10 and the plurality of trailers 12 pulled by the tractor 10. The plurality of trailers 12 comprises the first trailer 11 attached to the tractor 10.

The method comprises the following actions, which actions may be performed in any suitable order, and which actions may be combined with any one of the examples herein, in particular actions 301-305 above.

### Action 901

The method comprises, by the processing circuitry 1002 of the computer system 1000, obtaining one or more vehicle condition signals indicative of a status of the combination vehicle 1. The one or more vehicle condition signals are indicative of any one or more out of: an acceleration, a deceleration, a steering angle, at least one pedal position, a throttle status, at least one axle load, a suspension status, and a position of the combination vehicle 1.

### Action 902

The method comprises, by the processing circuitry 1002, obtaining one or more relative positions of the first trailer 11. The one or more relative positions are respectively indicative of a position and orientation of the first trailer 11, relative to the tractor 10.

### Action 903

The method comprises, by the processing circuitry 1002, based on the one or more relative positions of the first trailer 11, and based on the status of the combination vehicle 1, estimating a motion of the plurality of trailers 12.

### Action 904

The method comprises, by the processing circuitry 1002, based on the estimated motion of the plurality of trailers 12, determining whether or not the combination vehicle 1 is unstable.

### Machine Learning details

Examples herein, e.g.., the actions 301-305, may be part of a supervised learning model, e.g., relating to first, second, and/or third statistical model. In some examples, the actions 301-305 herein comprises reinforcement learning when sensor data, e.g., for kingpin and/or trailer positions, are available. Any of the estimations, predictions and/or determinations of examples herein e.g., as in actions 302-304, may be based on any one or more out of: Decision trees, Support Vector Machines, Ensemble learning, Convolution Neural Networks, Deep Convolution Neural Networks, and Recurrent Neural Networks.

### Regression based model

The primary focus of estimations, predictions and/or determinations herein may be to use regression to estimate the one or more relative positions of the first trailer 11, and stability condition with relevance to the tractor 10.

### Training

Training any of the machine learning methods herein, e.g., any estimation, prediction and/or determination, and/or the statistical models may use a large amount of training data collected running one or more combination vehicles with different parameters, e.g., using any one or more out of:
- different one or more surface conditions,
- different steering inputs, e.g., to generate different yaw rates at different wheel speeds and vehicle speeds, braking in a turn, etc.
- different models of the combination vehicle, such as 4x2, 6x2, 6x4 flatbed trailer, full trailer,
- different number of trailers,
- different accelerations,
- different deceleration/braking,
- different pedal positions, e.g., gas and/or brake pedal,
- different throttle status,
- different axle loads,
- different suspension status, and
- different positions, e.g., GPS positions.

### Training methods

Any of the following methods may be used for training statistical models herein and/or for training estimations, predictions and/or determinations of examples herein:
Linear Regression, Ridge Regression, Neural Network Regression, Lasso Regression, Decision Tree Regression, Random Forest, KNN Model, Support Vector Machines (SVM), Gausian Regression, and Polynomial Regression.

### Deployment

The trained statistical models and/or the actions 302-304, may be deployed in one of the controllers on board the combination vehicle 1 to predict instability and apply necessary braking/torque to prevent the vehicle from getting unstable such as jack knifing in low mu conditions, e.g., the computer system 1000 and/or the processing circuitry 1002 therein.

**FIG. 10** is a schematic diagram of a computer system **1000** for implementing examples disclosed herein. The computer system **1000** is adapted to execute instructions from a computer-readable medium to perform these and/or any of the functions or processing described herein. The computer system **1000** may be connected (e.g., networked) to other machines in a LAN, an intranet, an extranet, or the Internet. While only a single device is illustrated, the computer system **1000** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **1000** may comprise at least one computing device or electronic device capable of including firmware, hardware, and/or executing software instructions to implement the functionality described herein. The computer system **1000** may include processing circuitry **1002** (e.g., processing circuitry including one or more processor devices or control units), a memory **1004,** and a system bus **1006.** The computer system **1000** may include at least one computing device having the processing circuitry **1002.** The system bus **1006** provides an interface for system components including, but not limited to, the memory **1004** and the processing circuitry **1002.** The processing circuitry **1002** may include any number of hardware components for conducting data or signal processing or for executing computer code stored in memory **1004.** The processing circuitry **1002** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **1002** may further include computer executable code that controls operation of the programmable device.

The system bus **1006** may be any of several types of bus structures that may further interconnect to a memory bus (with or without a memory controller), a peripheral bus, and/or a local bus using any of a variety of bus architectures. The memory **1004** may be one or more devices for storing data and/or computer code for completing or facilitating methods described herein. The memory **1004** may include database components, object code components, script components, or other types of information structure for supporting the various activities herein. Any distributed or local memory device may be utilized with the systems and methods of this description. The memory **1004** may be communicably connected to the processing circuitry **1002** (e.g., via a circuit or any other wired, wireless, or network connection) and may include computer code for executing one or more processes described herein. The memory **1004** may include non-volatile memory **1008** (e.g., read-only memory (ROM), erasable programmable read-only memory (EPROM), electrically erasable programmable read-only memory (EEPROM), etc.), and volatile memory **1010** (e.g., random-access memory (RAM)), or any other medium which can be used to carry or store desired program code in the form of machine-executable instructions or data structures and which can be accessed by a computer or other machine with processing circuitry **1002.** A basic input/output system (BIOS) **1012** may be stored in the non-volatile memory **1008** and can include the basic routines that help to transfer information between elements within the computer system **1000.**

The computer system **1000** may further include or be coupled to a non-transitory computer-readable storage medium such as the storage device **1014,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **1014** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **1014** and/or in the volatile memory **1010,** which may include an operating system **1016** and/or one or more program modules **1018.** All or a portion of the examples disclosed herein may be implemented as a computer program **1020** stored on a transitory or non-transitory computer-usable or computer-readable storage medium (e.g., single medium or multiple media), such as the storage device **1014,** which includes complex programming instructions (e.g., complex computer-readable program code) to cause the processing circuitry **1002** to carry out actions described herein. Thus, the computer-readable program code of the computer program **1020** can comprise software instructions for implementing the functionality of the examples described herein when executed by the processing circuitry **1002.** In some examples, the storage device **1014** may be a computer program product (e.g., readable storage medium) storing the computer program **1020** thereon, where at least a portion of a computer program **1020** may be loadable (e.g., into a processor) for implementing the functionality of the examples described herein when executed by the processing circuitry **1002.** The processing circuitry **1002** may serve as a controller or control system for the computer system **1000** that is to implement the functionality described herein.

The computer system **1000** may include an input device interface **1022** configured to receive input and selections to be communicated to the computer system **1000** when executing instructions, such as from a keyboard, mouse, touch-sensitive surface, etc. Such input devices may be connected to the processing circuitry **1002** through the input device interface **1022** coupled to the system bus **1006** but can be connected through other interfaces, such as a parallel port, an Institute of Electrical and Electronic Engineers (IEEE) 1394 serial port, a Universal Serial Bus (USB) port, an IR interface, and the like. The computer system **1000** may include an output device interface **1024** configured to forward output, such as to a display, a video display unit (e.g., a liquid crystal display (LCD) or a cathode ray tube (CRT)). The computer system **1000** may include a communications interface **1026** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

## Claims

1. A computer system (1000) comprising processing circuitry (1002) configured to determine whether or not a combination vehicle (1) is unstable, wherein the combination vehicle (1) comprises a tractor (10) and a plurality of trailers (12) pulled by the tractor (10), and wherein the plurality of trailers (12) comprises a first trailer (11) attached to the tractor (10), the processing circuitry (1002) is further being configured to:
- obtain one or more vehicle condition signals indicative of a status of the combination vehicle (1), the one or more vehicle condition signals being indicative of any one or more out of: an acceleration, a deceleration, a steering angle, at least one pedal position, a throttle status, at least one axle load, a suspension status, and a position of the combination vehicle (1),
- obtain one or more relative positions of the first trailer (11), the one or more relative position respectively being indicative of a position and orientation of the first trailer (11), relative to the tractor (10),
**characterized in that** the processing circuitry (1002) is further being configured to:
- based on the one or more relative positions of the first trailer (11), and based on the status of the combination vehicle (1), estimate a motion (m0, m1, m2, m3) of the plurality of trailers (12),
- based on the estimated motion (m0, m1, m2, m3) of the plurality of trailers (12), determine whether or not the combination vehicle (1) is unstable.

2. The computer system (1000) of claim 1, wherein the processing circuitry (1002) is further configured to:
in response to determining that the combination vehicle (1) is unstable, trigger a preventive action.

3. The computer system (1000) of any of claims 1-2, wherein the processing circuitry (1002) is further configured to obtain the one or more relative positions of the first trailer (11) by being configured to:
- obtain sensor data indicative of a status of a kingpin of the tractor (10), wherein the first trailer (11) is attached to said kingpin, and
- predict the one or more relative positions of the first trailer (11) based on the status of the combination vehicle (1), and the obtained sensor data.

4. The computer system (1000) of any one of claims 1-3, further configured to predict the one or more relative positions of the first trailer (11) based on a first statistical model, wherein the first statistical model is trained on one or more vehicle training signals indicative of any one or more out of: an acceleration, a deceleration, a steering angle, at least one pedal position, a throttle status, at least one axle load, a suspension status, and a position of a first training combination vehicle, and trained on sensor data indicative of a relative position of a training trailer attached to a tractor of the first training combination vehicle.

5. The computer system (1000) of any of claims 1-4, wherein the processing circuitry (1002) is further configured to obtain the one or more relative positions of the first trailer (11) by at least partly measuring the one or more relative positions of the first trailer (11) using at least two position sensors (20) mounted at different locations of the tractor (10).

6. The computer system (1000) of any of claims 1-5, wherein the processing circuitry (1002) is configured to estimate the motion (m0, m1, m2, m3) of the plurality of trailers (12) by being configured to:
- estimate a motion (m1) of the first trailer (11), wherein the motion of the first trailer (11) is estimated based on the one or more relative positions of the first trailer (11), and based on the status of the combination vehicle (1) and
- predict the motion (m0, m1, m2, m3) of the plurality of trailers (12) based on the motion (m1) of the first trailer (11).

7. The computer system (1000) of claim 6, wherein the processing circuitry (1002) is configured to predict the motion (m0, m1, m2, m3) of the plurality of trailers (12) at least partly based on a quantity of trailers in the plurality of trailers (12).

8. The computer system (1000) of any of claims 6-7, wherein the processing circuitry (1002) is configured to predict the motion (m0, m1, m2, m3) of the plurality of trailers (12) at least partly based on a second statistical model trained on training data comprising a relative motion of one or more second training trailers of one or more second training combination vehicles, a number of trailers in the one or more second training combination vehicles, and motion sensor data of respective one or more training trailers in the one or more second training combination vehicles.

9. The computer system (1000) of any of claims 1-8, wherein the processing circuitry (1002) is configured to determine whether or not the combination vehicle (1) is unstable by determining whether or not the estimated motion (m0, m1, m2, m3) of the plurality of trailers (12) is associated with a motion predefined as unstable.

10. The computer system (1000) of any of claims 1-9, wherein the processing circuitry (1002) is configured to determine whether or not the combination vehicle (1) is unstable based on a third statistical model, the third statistical model being trained on one or more third training trailer motions of one or more third training combination vehicles, and trained by labelling one or more motions of the training trailer motions as unstable.

11. A combination vehicle (1) comprising a tractor (10) and a plurality of trailers (12) pulled by the tractor (10), and wherein the plurality of trailers (12) comprises a first trailer (11) attached to the tractor (10), and wherein the combination vehicle (1) comprises the computer system (1000) of any of claims 1-10.

12. A computer-implemented method for determining whether or not a combination vehicle (1) is unstable, wherein the combination vehicle (1) comprises a tractor (10) and a plurality of trailers (12) pulled by the tractor (10), and wherein the plurality of trailers (12) comprises a first trailer (11) attached to the tractor (10), the method comprising:
- by processing circuitry (1002) of a computer system (1000), obtaining (301, 901) one or more vehicle condition signals indicative of a status of the combination vehicle (1), the one or more vehicle condition signals being indicative of any one or more out of: an acceleration, a deceleration, a steering angle, at least one pedal position, a throttle status, at least one axle load, a suspension status, and a position of the combination vehicle (1),
- by the processing circuitry (1002), obtaining (302, 902) one or more relative positions of the first trailer (11), the one or more relative position respectively being indicative of a position and orientation of the first trailer (11), relative to the tractor (10),
**characterized in that** said method further comprises:
- by the processing circuitry (1002), based on the one or more relative positions of the first trailer (11), and based on the status of the combination vehicle (1), estimating (303, 903) a motion (m0, m1, m2, m3) of the plurality of trailers (12),
- by the processing circuitry (1002), based on the estimated motion (m0, m1, m2, m3) of the plurality of trailers (12), determining (304, 904) whether or not the combination vehicle (1) is unstable.

13. The method of claim 12, further comprising:
- by processing circuitry (1002) of a computer system (1000), in response to determining that the combination vehicle (1) is unstable, triggering (305) a preventive action.

14. A computer program product comprising program code for performing, when executed by the processing circuitry (1002), the method of any of claims 12-13.

15. A non-transitory computer-readable storage medium comprising instructions, which when executed by the processing circuitry (1002), cause the processing circuitry (1002) to perform the method of any of claims 12-13.

## Patentansprüche

1. Computersystem (1000), umfassend einen Verarbeitungsschaltkreis (1002), der konfiguriert ist, um zu bestimmen, ob ein Kombinationsfahrzeug (1) instabil ist oder nicht, wobei das Kombinationsfahrzeug (1) eine Zugmaschine (10) und eine Vielzahl von Anhängern (12) umfasst, die von der Zugmaschine (10) gezogen werden, und wobei die Vielzahl von Anhängern (12) einen ersten Anhänger (11) umfasst, der an der Zugmaschine (10) befestigt ist, wobei der Verarbeitungsschaltkreis (1002) ferner konfiguriert ist, um:
- ein oder mehrere Fahrzeugzustandssignale zu erhalten, die einen Status des Kombinationsfahrzeugs (1) anzeigen, wobei das eine oder die mehreren Fahrzeugzustandssignale eines oder mehreres anzeigen von: einer Beschleunigung, einer Verzögerung, einem Lenkwinkel, mindestens einer Pedalstellung, einem Drosselklappenstatus, mindestens einer Achslast, einem Federungsstatus und einer Position des Kombinationsfahrzeugs (1),
- eine oder mehrere relative Positionen des ersten Anhängers (11) zu erhalten, wobei die eine oder die mehreren relativen Positionen jeweils eine Lage des ersten Anhängers (11) relativ zu der Zugmaschine (10) anzeigen,
**dadurch gekennzeichnet, dass** der Verarbeitungsschaltkreis (1002) ferner konfiguriert ist, um:
- basierend auf der einen oder den mehreren relativen Positionen des ersten Anhängers (11) und basierend auf dem Status des Kombinationsfahrzeugs (1), eine Bewegung (m0, m1, m2, m3) der Vielzahl von Anhängern (12) zu schätzen,
- basierend auf der geschätzten Bewegung (m0, m1, m2, m3) der Vielzahl von Anhängern (12) zu bestimmen, ob das Kombinationsfahrzeug (1) instabil ist oder nicht.

2. Computersystem (1000) nach Anspruch 1, wobei die Verarbeitungsschaltung (1002) ferner konfiguriert ist, um:
als Reaktion auf die Bestimmung, dass das Kombinationsfahrzeug (1) instabil ist, eine Präventivmaßnahme auslösen.

3. Computersystem (1000) nach einem der Ansprüche 1-2, wobei der Verarbeitungsschaltkreis (1002) ferner konfiguriert ist, um die eine oder mehreren relativen Positionen des ersten Anhängers (11) zu erhalten, indem es konfiguriert ist, um:
- Sensordaten zu erhalten, die einen Status eines Achszapfens der Zugmaschine (10) anzeigen, wobei der erste Anhänger (11) an dem Achszapfen befestigt ist, und
- die eine oder mehreren relativen Positionen des ersten Anhängers (11) basierend auf dem Status des Kombinationsfahrzeugs (1) und den erhaltenen Sensordaten vorherzusagen.

4. Computersystem (1000) nach einem der Ansprüche 1-3, das ferner konfiguriert ist, um die eine oder mehreren relativen Positionen des ersten Anhängers (11) basierend auf einem ersten statistischen Modell vorherzusagen, wobei das erste statistische Modell mit einem oder mehreren Fahrzeugtrainingssignalen trainiert ist, die eines oder mehreres anzeigen von:
einer Beschleunigung, einer Verzögerung, einem Lenkwinkel, mindestens einer Pedalposition, einem Drosselstatus, mindestens einer Achslast, einem Federungsstatus und einer Position eines ersten Trainingskombinationsfahrzeugs, und mit Sensordaten trainiert ist, die eine relative Position eines Trainingsanhängers anzeigen, der an eine Zugmaschine des ersten Trainingskombinationsfahrzeugs angehängt ist.

5. Computersystem (1000) nach einem der Ansprüche 1-4, wobei der Verarbeitungsschaltkreis (1002) ferner konfiguriert ist, um die eine oder mehreren relativen Positionen des ersten Anhängers (11) zu erhalten, indem mindestens teilweise die eine oder mehreren relativen Positionen des ersten Anhängers (11) unter Verwendung von mindestens zwei Positionssensoren (20) gemessen werden, die an verschiedenen Stellen der Zugmaschine (10) montiert sind.

6. Computersystem (1000) nach einem der Ansprüche 1-5, wobei der Verarbeitungsschaltkreis (1002) konfiguriert ist, um die Bewegung (m0, m1, m2, m3) der Vielzahl von Anhängern (12) zu schätzen, indem es konfiguriert ist, um:
- eine Bewegung (m1) des ersten Anhängers (11) zu schätzen, wobei die Bewegung des ersten Anhängers (11) basierend auf der einen oder den mehreren relativen Positionen des ersten Anhängers (11) und basierend auf dem Status des Kombinationsfahrzeugs (1) geschätzt wird und
- die Bewegung (m0, m1, m2, m3) der Vielzahl von Anhängern (12) basierend auf der Bewegung (m1) des ersten Anhängers (11) vorherzusagen.

7. Computersystem (1000) nach Anspruch 6, wobei der Verarbeitungsschaltkreis (1002) konfiguriert ist, um die Bewegung (m0, m1, m2, m3) der Vielzahl von Anhängern (12) mindestens teilweise basierend auf einer Anzahl von Anhängern in der Vielzahl von Anhängern (12) vorherzusagen.

8. Computersystem (1000) nach einem der Ansprüche 6-7, wobei der Verarbeitungsschaltkreis (1002) konfiguriert ist, um die Bewegung (m0, m1, m2, m3) der Vielzahl von Anhängern (12) mindestens teilweise basierend auf einem zweiten statistischen Modell vorherzusagen, das mit Trainingsdaten trainiert ist, die eine relative Bewegung eines oder mehrerer zweiter Trainingsanhänger eines oder mehrerer zweiter Trainingskombinationsfahrzeuge, eine Anzahl von Anhängern in dem einen oder den mehreren zweiten Trainingskombinationsfahrzeugen und Bewegungssensordaten eines jeweiligen einen oder jeweiliger mehrerer Trainingsanhänger in dem einen oder den mehreren zweiten Trainingskombinationsfahrzeugen umfassen.

9. Computersystem (1000) nach einem der Ansprüche 1-8, wobei der Verarbeitungsschaltkreis (1002) konfiguriert ist, um zu bestimmen, ob das Kombinationsfahrzeug (1) instabil ist oder nicht, indem bestimmt wird, ob die geschätzte Bewegung (m0, m1, m2, m3) der Vielzahl von Anhängern (12) mit einer als instabil vorgegebenen Bewegung assoziiert ist oder nicht.

10. Computersystem (1000) nach einem der Ansprüche 1-9, wobei der Verarbeitungsschaltkreis (1002) konfiguriert ist, um zu bestimmen, ob das Kombinationsfahrzeug (1) instabil ist oder nicht, basierend auf einem dritten statistischen Modell, wobei das dritte statistische Modell mit einer oder mehreren dritten Trainingsanhängerbewegungen von einem oder mehreren dritten Trainingskombinationsfahrzeugen trainiert ist und durch Kennzeichnung einer oder mehrerer Bewegungen der Trainingsanhängerbewegungen als instabil trainiert wird.

11. Kombinationsfahrzeug (1), das eine Zugmaschine (10) und eine Vielzahl von Anhängern (12) umfasst, die von der Zugmaschine (10) gezogen werden, und wobei die Vielzahl von Anhängern (12) einen ersten Anhänger (11) umfasst, der an der Zugmaschine (10) befestigt ist, und wobei das Kombinationsfahrzeug (1) das Computersystem (1000) nach einem der Ansprüche 1-10 umfasst.

12. Computer-implementiertes Verfahren zum Bestimmen, ob ein Kombinationsfahrzeug (1) instabil ist oder nicht, wobei das Kombinationsfahrzeug (1) eine Zugmaschine (10) und eine Vielzahl von Anhängern (12) umfasst, die von der Zugmaschine (10) gezogen werden, und wobei die Vielzahl von Anhängern (12) einen ersten Anhänger (11) umfasst, der an der Zugmaschine (10) befestigt ist, das Verfahren umfassend:
- durch einen Verarbeitungsschaltkreis (1002) eines Computersystems (1000), Erhalten (301, 901) eines oder mehrerer Fahrzeugzustandssignale, die einen Status des Kombinationsfahrzeugs (1) anzeigen, wobei das eine oder die mehreren Fahrzeugzustandssignale eines oder mehreres anzeigen von: einer Beschleunigung, einer Verzögerung, einem Lenkwinkel, mindestens einer Pedalposition, einem Drosselstatus, mindestens einer Achslast, einem Federungsstatus und einer Position des Kombinationsfahrzeugs (1),
- durch den Verarbeitungsschaltkreis (1002), Erhalten (302, 902) einer oder mehrerer relativer Lagen des ersten Anhängers (11), wobei die eine oder die mehreren relativen Lagen jeweils eine Lage des ersten Anhängers (11) relativ zu der Zugmaschine (10) anzeigen,
**dadurch gekennzeichnet, dass** das Verfahren ferner umfasst:
- durch den Verarbeitungsschaltkreis (1002), basierend auf der einen oder den mehreren relativen Positionen des ersten Anhängers (11) und basierend auf dem Status des Kombinationsfahrzeugs (1), Schätzen (303, 903) einer Bewegung (m0, m1, m2, m3) der Vielzahl von Anhängern (12),
- durch den Verarbeitungsschaltkreis (1002), basierend auf der geschätzten Bewegung (m0, m1, m2, m3) der Vielzahl von Anhängern (12), Bestimmen (304, 904), ob das Kombinationsfahrzeug (1) instabil ist oder nicht.

13. Verfahren nach Anspruch 12, ferner umfassend:
- durch einen Verarbeitungsschaltkreis (1002) eines Computersystems (1000), als Reaktion auf das Bestimmen, dass das Kombinationsfahrzeug (1) instabil ist, Auslösen (305) einer Präventivmaßnahme.

14. Computerprogrammprodukt, das Programmcode zum Durchführen, wenn er von dem Verarbeitungsschaltkreis (1002) ausgeführt wird, des Verfahrens nach einem der Ansprüche 12-13 umfasst.

15. Nichtflüchtiges, computerlesbares Speichermedium, umfassend Anweisungen, die bei Ausführung durch einen Verarbeitungsschaltkreis (1002) den Verarbeitungsschaltkreis (1002) veranlassen, das Verfahren nach einem der Ansprüche 12-13 durchzuführen.

## Revendications

1. Système informatique (1000) comprenant un système de circuits de traitement (1002) configuré pour déterminer si un véhicule combiné (1) est instable ou non, dans lequel le véhicule combiné (1) comprend un tracteur (10) et une pluralité de remorques (12) tirées par le tracteur (10), et dans lequel la pluralité de remorques (12) comprend une première remorque (11) attachée au tracteur (10), le système de circuits de traitement (1002) est en outre configuré pour :
- obtenir un ou plusieurs signaux d'état de véhicule indiquant un état du véhicule combiné (1), l'un ou plusieurs signaux d'état de véhicule indiquant l'un quelconque ou plusieurs parmi : une accélération, une décélération, un angle de braquage, au moins une position de pédale, un état d'accélérateur, au moins une charge par essieu, un état de suspension et une position du véhicule combiné (1),
- obtenir une ou plusieurs positions relatives de la première remorque (11), l'une ou plusieurs positions relatives indiquant respectivement une position et une orientation de la première remorque (11), par rapport au tracteur (10),
**caractérisé en ce que** le système de circuits de traitement (1002) est en outre configuré pour :
- en fonction de l'une ou plusieurs positions relatives de la première remorque (11), et en fonction de l'état du véhicule combiné (1), estimer un mouvement (m0, m1, m2, m3) de la pluralité de remorques (12),
- en fonction du mouvement estimé (m0, m1, m2, m3) de la pluralité de remorques (12), déterminer si le véhicule combiné (1) est instable ou non.

2. Système informatique (1000) selon la revendication 1, dans lequel le système de circuits de traitement (1002) est en outre configuré pour :
en réponse à la détermination du caractère instable du véhicule combiné (1), déclencher une action préventive.

3. Système informatique (1000) selon l'une quelconque des revendications 1 à 2, dans lequel le système de circuits de traitement (1002) est en outre configuré pour obtenir l'une ou plusieurs positions relatives de la première remorque (11) en étant configuré pour :
- obtenir des données de capteur indiquant un état d'un pivot d'attelage du tracteur (10), dans lequel la première remorque (11) est attachée audit pivot d'attelage, et
- prédire l'une ou plusieurs positions relatives de la première remorque (11) en fonction de l'état du véhicule combiné (1) et des données de capteur obtenues.

4. Système informatique (1000) selon l'une quelconque des revendications 1 à 3, configuré en outre pour prédire l'une ou plusieurs positions relatives de la première remorque (11) en fonction d'un premier modèle statistique, dans lequel le premier modèle statistique est entraîné sur un ou plusieurs signaux d'entraînement de véhicule indiquant l'un quelconque ou plusieurs parmi : une accélération, une décélération, un angle de braquage, au moins une position de pédale, un état d'accélérateur, au moins une charge par essieu, un état de suspension, et une position d'un premier véhicule combiné d'entraînement, et entraîné sur des données de capteur indiquant une position relative d'une remorque d'entraînement attachée à un tracteur du premier véhicule combiné d'entraînement.

5. Système informatique (1000) selon l'une quelconque des revendications 1 à 4, dans lequel le système de circuits de traitement (1002) est en outre configuré pour obtenir l'une ou plusieurs positions relatives de la première remorque (11) en mesurant au moins partiellement l'une ou plusieurs positions relatives de la première remorque (11) à l'aide d'au moins deux capteurs de position (20) montés à différents emplacements du tracteur (10).

6. Système informatique (1000) selon l'une quelconque des revendications 1 à 5, dans lequel le système de circuits de traitement (1002) est configuré pour estimer le mouvement (m0, m1, m2, m3) de la pluralité de remorques (12) en étant configuré pour :
- estimer un mouvement (m1) de la première remorque (11), dans lequel le mouvement de la première remorque (11) est estimé en fonction de l'une ou plusieurs positions relatives de la première remorque (11), et en fonction de l'état du véhicule combiné (1) et
- prédire le mouvement (m0, m1, m2, m3) de la pluralité de remorques (12) en fonction du mouvement (m1) de la première remorque (11).

7. Système informatique (1000) selon la revendication 6, dans lequel le système de circuits de traitement (1002) est configuré pour prédire le mouvement (m0, m1, m2, m3) de la pluralité de remorques (12) au moins partiellement en fonction d'une quantité de remorques dans la pluralité de remorques (12).

8. Système informatique (1000) selon l'une quelconque des revendications 6 à 7, dans lequel le système de circuits de traitement (1002) est configuré pour prédire le mouvement (m0, m1, m2, m3) de la pluralité de remorques (12) au moins partiellement en fonction d'un deuxième modèle statistique entraîné sur des données d'entraînement comprenant un mouvement relatif d'une ou plusieurs deuxièmes remorques d'entraînement d'un ou plusieurs deuxièmes véhicules combinés d'entraînement, un nombre de remorques dans l'un ou plusieurs deuxièmes véhicules combinés d'entraînement, et des données de capteur de mouvement d'une ou plusieurs remorques d'entraînement respectives dans l'un ou plusieurs deuxièmes véhicules combinés d'entraînement.

9. Système informatique (1000) selon l'une quelconque des revendications 1 à 8, dans lequel le système de circuits de traitement (1002) est configuré pour déterminer si le véhicule combiné (1) est instable ou non en déterminant si le mouvement estimé (m0, m1, m2, m3) de la pluralité de remorques (12) est associé ou non à un mouvement prédéfini comme instable.

10. Système informatique (1000) selon l'une quelconque des revendications 1 à 9, dans lequel le système de circuits de traitement (1002) est configuré pour déterminer si le véhicule combiné (1) est instable ou non en fonction d'un troisième modèle statistique, le troisième modèle statistique étant entraîné sur un ou plusieurs mouvements de troisième remorque d'entraînement d'un ou plusieurs troisièmes véhicules combinés d'entraînement, et entraîné en étiquetant un ou plusieurs mouvements des mouvements de remorque d'entraînement comme instables.

11. Véhicule combiné (1) comprenant un tracteur (10) et une pluralité de remorques (12) tirées par le tracteur (10), et dans lequel la pluralité de remorques (12) comprend une première remorque (11) attachée au tracteur (10), et dans lequel le véhicule combiné (1) comprend le système informatique (1000) selon l'une quelconque des revendications 1 à 10.

12. Procédé mis en œuvre par ordinateur permettant de déterminer si un véhicule combiné (1) est instable ou non, dans lequel le véhicule combiné (1) comprend un tracteur (10) et une pluralité de remorques (12) tirées par le tracteur (10), et dans lequel la pluralité de remorques (12) comprend une première remorque (11) attachée au tracteur (10), le procédé comprenant :
- par un système de circuits de traitement (1002) d'un système informatique (1000), l'obtention (301, 901) d'un ou plusieurs signaux d'état de véhicule indiquant un état du véhicule combiné (1), l'un ou plusieurs signaux d'état de véhicule indiquant l'un quelconque ou plusieurs parmi : une accélération, une décélération, un angle de braquage, au moins une position de pédale, un état d'accélérateur, au moins une charge par essieu, un état de suspension, et une position du véhicule combiné (1),
- par le système de circuits de traitement (1002), l'obtention (302, 902) d'une ou plusieurs positions relatives de la première remorque (11), l'une ou plusieurs positions relatives indiquant respectivement une position et une orientation de la première remorque (11), par rapport au tracteur (10),
**caractérisé en ce que** ledit procédé comprend en outre :
- par le système de circuits de traitement (1002), en fonction de l'une ou plusieurs positions relatives de la première remorque (11), et en fonction de l'état du véhicule combiné (1), l'estimation (303, 903) d'un mouvement (m0, m1, m2, m3) de la pluralité de remorques (12),
- par le système de circuits de traitement (1002), en fonction du mouvement estimé (m0, m1, m2, m3) de la pluralité de remorques (12), la détermination (304, 904) du caractère instable ou non du véhicule combiné (1).

13. Procédé selon la revendication 12, comprenant en outre :
- par un système de circuits de traitement (1002) d'un système informatique (1000), en réponse à la détermination du caractère instable du véhicule combiné (1), le déclenchement (305) d'une action préventive.

14. Produit programme informatique comprenant un code de programme permettant de mettre en œuvre, lorsqu'il est exécuté par le système de circuits de traitement (1002), le procédé selon l'une quelconque des revendications 12 à 13.

15. Support de stockage non transitoire lisible par ordinateur comprenant des instructions, qui lorsqu'elles sont exécutées par le système de circuits de traitement (1002), amènent le système de circuits de traitement (1002) à mettre en œuvre le procédé selon l'une quelconque des revendications 12 à 13.
